Europäisches Patentamt

European Patent Office

Office européen des brevets

(11) Numéro de publication : **0 294 293 B1**

## (12) FASCICULE DE BREVET EUROPEEN

(45) Date de publication du fascicule du brevet :
**06.05.92 Bulletin 92/19**

(51) Int. Cl.$^5$ : **G06F 3/023**

(21) Numéro de dépôt : **88401345.9**

(22) Date de dépôt : **03.06.88**

(54) **Clavier à configuration modifiable.**

(30) Priorité : **05.06.87 FR 8707944**

(43) Date de publication de la demande :
**07.12.88 Bulletin 88/49**

(45) Mention de la délivrance du brevet :
**06.05.92 Bulletin 92/19**

(84) Etats contractants désignés :
**DE GB IT SE**

(56) Documents cités :
**US-A- 4 313 108**
**US-A- 4 633 227**
**PATENT ABSTRACTS OF JAPAN, vol. 8, no. 38
(P-255)[1475], 18 février 1984, page 109 P 255;
& JP-A-58 191 060 (SHARP K.K.)08-11-1983**

(73) Titulaire : **THOMSON-CSF**
**51, Esplanade du Général de Gaulle**
**F-92800 Puteaux (FR)**

(72) Inventeur : **Buisson, Jean-Michel**
**Thomson-CSF-SCPI**
**19 avenue de Messine**
**F-75008 Paris (FR)**
Inventeur : **Soubrier, Jean-Marie**
**Thomson-CSF-SCPI**
**19 avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

**Description**

L'invention concerne les claviers d'une manière générale mais, plus particulièrement, les claviers à configuration modifiable dans lesquels les touches peuvent avoir des significations différentes à la demande de l'utilisateur, c'est-à-dire que leur configuration est modifiable tant dans les significations elles-mêmes que dans l'affichage de ces significations.

Les machines à écrire ont des claviers à configuration modifiable dans la mesure où chaque touche a deux significations, par exemple la lettre minuscule et la lettre majuscule. Mais l'affichage de la signification pour les lettres n'est pas changé d'une signification à l'autre, seule la lettre majuscule étant affichée sur la touche. Lorsque les deux significations sont très différentes, chiffre et autre signe par exemple, ces deux significations sont portées sur la touche elle-même.

Les calculateurs en tant que tels ou intégrés dans des machines sont commandés à partir de pupitres de commande dont l'organe essentiel est un clavier qui est souvent associé à une imprimante et à un dispositif de visualisation tel qu'un écran de tube cathodique. Pour simplifier et faciliter le dialogue entre le calculateur et l'utilisateur, les claviers comportent de nombreuses touches autres que celles correspondant aux caractères alphanumériques et chaque touche supplémentaire correspond à une fonction bien déterminée. On aboutit alors à une augmentation importante du nombre de touches au fur et à mesure que le nombre de fonctions s'accroît car il est difficile d'aller au-delà de deux significations, et donc deux visualisations, par touche. En outre, cette augmentation du nombre de touches conduit à des claviers aux dimensions de plus en plus grandes, dimensions qui sont parfois incompatibles avec certaines applications.

Il a été proposé un certain nombre de solutions à ce problème du changement de la signification des touches et de la visualisation correspondante.

L'une d'entre elles consiste à intégrer dans chaque touche un dispositif de visualisation de la signification, telle qu'une barrette à cristaux liquides, dont on commande l'affichage par des liaisons électriques combinées avec le mouvement de la touche. Dans une telle solution, les liaisons électriques sont complexes et la clarté de l'affichage diminue du fait de la salissure et de la détérioration du traitement anti-reflet dues au contact du doigt. En outre, d'une manière générale, le prix de revient d'un tel clavier est élevé du fait du coût du dispositif mécanique des touches pour les liaisons électriques.

Une deuxième solution consiste à disposer un film transparent ayant des contacts intégrés sur un écran de visualisation qui affiche la signification des contacts. Un tel dispositif présente l'inconvénient principal de donner une vision affectée par la parallaxe, les réflexions parasites, les pertes en transmission et la salissure due au contact du doigt. En outre, il y a absence de sensation mécanique au contact de la touche, sensation qui est nécessaire à l'opérateur même si chaque action de la touche est accompagnée d'un signal sonore.

Une troisième solution consiste à disposer, sur le pourtour d'un écran de visualisation, un ensemble de diodes photoémissives associées à des photojonctions ou à des cellules photosensibles de manière à réaliser un arrangement matriciel de lignes et colonnes, chaque ligne et colonne étant définie par une diode photoémissive et une cellule photosensible. Chaque touche correspond à une intersection d'une ligne et d'une colonne et sa signification est affichée sur l'écran de visualisation à cette intersection. Ainsi, le choix d'une touche s'effectue par un doigt de l'opérateur qui intercepte le rayon lumineux d'une ligne et d'une colonne, ce qui définit la position de la touche et donc sa signification. Un tel dispositif présente les inconvénients suivants : l'absence de sensation mécanique lors du choix de la "touche", le risque de brouillage par suite d'une interposition d'un masque dans les faisceaux lumineux des lignes et des colonnes, la perte d'une ligne ou d'une colonne de touches en cas de panne de l'émetteur ou du récepteur correspondant et la présence de réflexions parasites sur la surface de l'écran de visualisation si les faisceaux lumineux ne sont pas assez directifs et étroits.

Le brevet US 4,633,227 décrit un dispositif à clavier programmable permettant à un utilisateur de sélectionner, parmi un nombre prédéterminé de configurations possibles, une configuration unique visualisée sur des zones de visualisation séparées, chacune de ces zones étant associée et placée à proximité d'une touche.

Un but de la présente invention est de réaliser un clavier ayant une configuration modifiable particulière qui ne présente pas les inconvénients ci-dessus mentionnés des claviers de l'art antérieur en utilisant au moins un écran plat de visualisation et au moins une rangée de touches ainsi que des circuits électroniques associés.

Un autre but de la présente invention est un clavier à configuration modifiable qui est organisée en deux parties indépendantes, chaque partie pouvant fonctionner en mode secours en cas de panne de l'autre.

Encore un autre but de la présente invention est un clavier à configuration modifiable qui permet la visualisation immédiate de messages notamment la signification de la touche actionnée par l'utilisateur.

Plus précisément l'invention se rapporte à un clavier à configuration modifiable tel que décrit dans la revendication 1.

De préférence, le clavier reconfigurable comprend au moins deux écrans plats de visualisation et deux rangées de touches associées, chaque écran plat étant associé à des moyens d'affichage et chaque rangée de touches étant associée à des moyens d'identification, de manière à permettre en cas de panne, le remplacement de l'un des écrans plats par l'autre ainsi que de l'une des rangées de touches par l'autre.

Les moyens d'exploitation de la signification de la touche actionnée comprennent, par exemple, un autre écran plat de visualisation auquel n'est pas associé une rangée de touches, cet écran plat servant à afficher la signification de la touche actionnée sous la commande de moyens d'affichage.

Dans le cas où plusieurs écrans plats associés chacun à une rangée de touches sont utilisés pour réaliser un clavier, l'invention propose de les réaliser sous la forme d'un ou de deux écrans plats sur lesquels les rangées de touches délimitent des zones d'affichage en masquant la partie correspondante du ou desdits écrans plats. Dans ce cas, les rangées de touches sont portées par des bandes parallèles qui délimitent lesdites zones d'affichage. Ces bandes parallèles peuvent constituer une grille amovible qui est rapportée sur le ou les écrans plats.

D'autres caractéristiques et avantages de la présente invention apparaîtront à la lecture de la description suivante d'un exemple particulier de réalisation, ladite description étant faite en relation avec les dessins ci-annexés dans lesquels :

– la figure 1 est une vue de dessus d'un clavier à configuration modifiable selon l'invention ;
– la figure 2 est une vue en coupe partielle du clavier selon la ligne II-II de la figure 1 ;
– la figure 3 est une vue en coupe partielle du clavier selon la ligne III-III de la figure 4 ;
– la figure 4 est une vue en coupe partielle du clavier selon la ligne IV-IV de la figure 2 ;
– la figure 5 est un schéma fonctionnel du clavier selon l'invention, et
– la figure 6 est un schéma fonctionnel du circuit de gestion et de commande 32 de la figure 5.

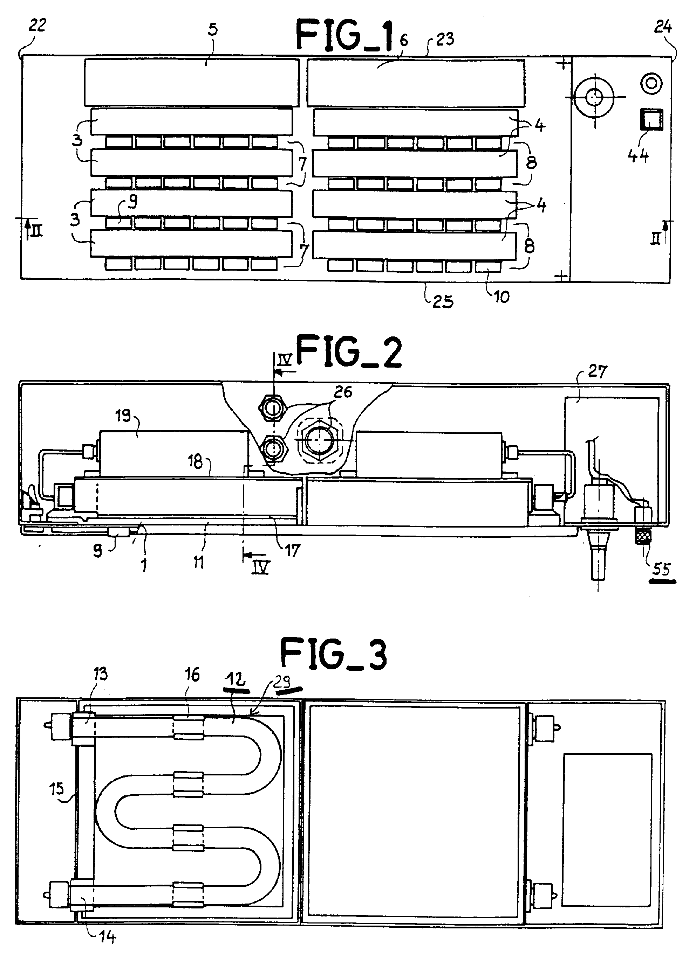

Un exemple particulier de réalisation d'un clavier à configuration modifiable selon la présente invention comprend (figures 1 à 4) une plaque 1 qui est fixée sur un support 2 par des retours 28.

La forme du support 2 est telle que la plaque 1 est légèrement inclinée par rapport au plan horizontal comme l'est un clavier de machine à écrire. La plaque 1 est percée notamment de huit ouvertures ou fenêtres rectangulaires identiques 3 et 4 qui sont séparées par des bandes 7 et 8, respectivement. Ces bandes 7 et 8, de même largeur, servent d'appui à des touches au nombre de quarante huit telles que celles référencées 9 et 10, du type à action mécanique de préférence. La plaque 1 présente, à sa partie haute, deux autres ouvertures ou fenêtres rectangulaires identiques 5 et 6 qui ont des dimensions plus grandes que les ouvertures 3 et 4. Ces ouvertures 5 et 6 peuvent ne pas être séparées des deux autres ouvertures disposées juste en dessous de manière à constituer chacune une seule et même fenêtre avec l'ouverture référencée 3 ou 4 adjacente.

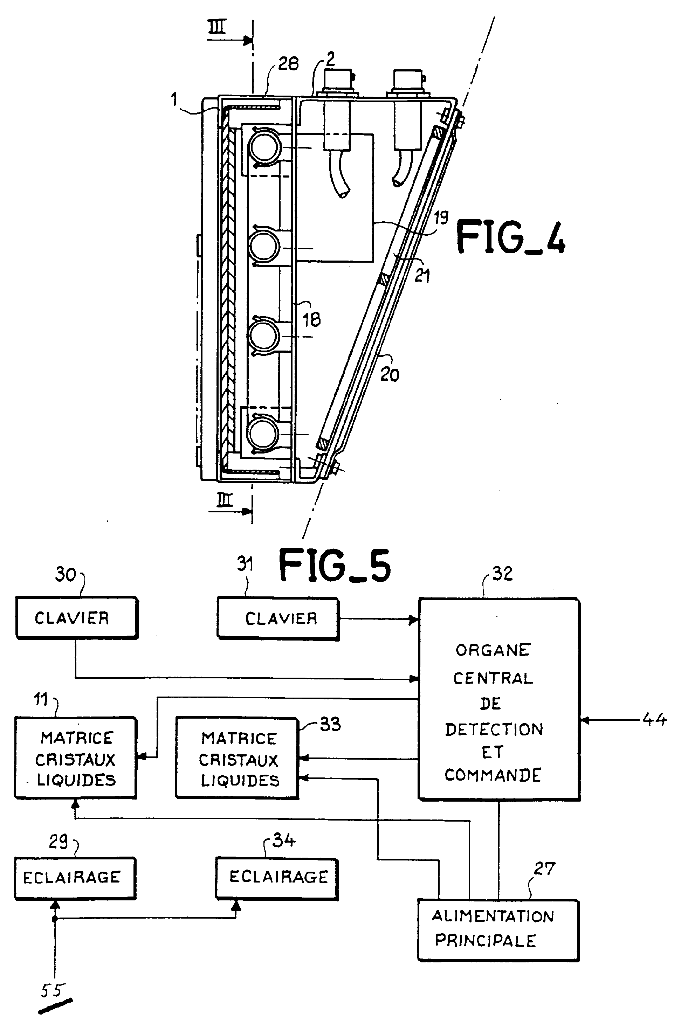

Comme le montrent les figures 2 et 4, les touches sont disposées sur le côté extérieur de la plaque 1. Sur le côté intérieur de la plaque 1 sont fixés deux écrans plats, tels que celui référencé 11, chaque écran plat occupant par exemple les ouvertures 3, 5 (ou 4, 6) ainsi que les bandes 7 (ou 8) sur lesquelles les touches sont disposées. Chaque écran plat est par exemple du type à cristaux liquides et peut être constitué d'une matrice comportant 640 x 880 points élémentaires répartis sur un carré ayant un côté de longueur voisine de 12,2 centimètres. Cet écran peut être du type couleur, auquel cas les points élémentaires sont groupés par 4, deux suivant l'horizontale et deux suivant la verticale, chaque groupe de quatre points constituant un pixel.

L'éclairage de chaque matrice à cristaux liquides est obtenu, par exemple, par un tube fluorescent 12 qui est disposé sous la matrice et qui est maintenu en place par ses extrémités 13 et 14 fixées à une plaque 15. Des clips 16 sont également prévus pour améliorer le maintien mécanique du tube fluorescent. Pour assurer un éclairage uniforme de la matrice, cette dernière repose sur un verre dépoli 17. Pour améliorer cet éclairage, la lumière émise par le tube vers le côté opposé à la matrice est réfléchie vers cette dernière par tous types de miroir, telle qu'une plaque métallique chromée 18. Les extrémités 13 et 14 du tube fluorescent 12 sont connectées à un dispositif d'alimentation 19.

La plaque 1 et le support 2 forment un boîtier dont la face avant inclinée par rapport au plan horizontal comporte la plaque 1. La face arrière du boîtier est constituée par un fond 20 qui est amovible de manière à avoir accès à l'intérieur du boîtier. Ce fond 20 est prévu pour servir de support à des cartes de circuits imprimés 21 pour des circuits électroniques dont les fonctions seront décrites ci-après.

La face avant du clavier peut servir de support à divers dispositifs de commande manuelle tel qu'un bouton de réglage 55 de l'intensité d'éclairage des tubes fluorescents ou encore une touche de validation 44 des touches actionnées. De même, les faces latérales 22 à 25 du boîtier peuvent servir de support à d'autres éléments telles que des embases 26 sur la face 23 pour le passage des câbles électriques ou encore un dispositif d'alimentation électrique 27.

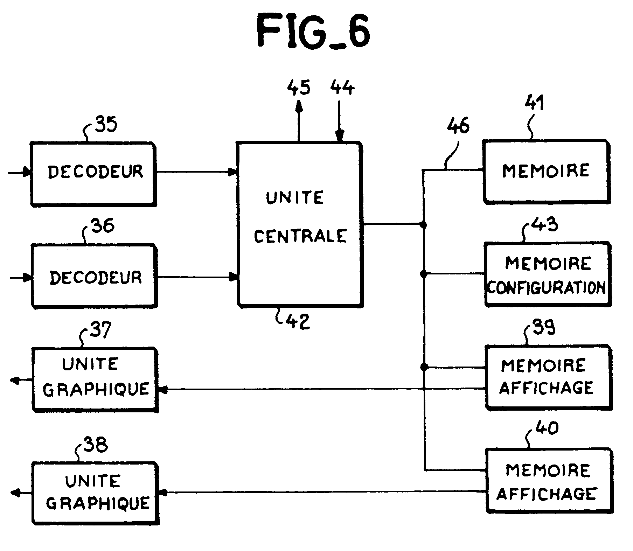

Avec le clavier dont on vient de décrire l'agencement mécanique des différents éléments, notamment l'ensemble des touches et les deux matrices à cristaux liquides 11 et 33, il est possible, à l'aide de circuits électroniques qui seront décrits en relation avec les figures 5 et 6 d'afficher sur les matrices à l'endroit des ouvertures 3 et 4 les différentes significations choisies pour les touches en regard et de les modifier à la demande parmi les différentes significations possibles pour chaque touche. En outre, il est possible d'afficher des messages alphanumériques ou autres symboles sur les parties des matrices 11 et 33 correspondant aux fenêtres 5 et 6.

Sur la figure 5, qui est un schéma fonctionnel des circuits électroniques, il apparaît que le clavier de quarante huit touches est divisé en deux parties indépendantes 30 et 31 qui sont connectées séparément à un circuit de gestion et de commande 32. Ce circuit 32 est également connecté de manière séparée les matrices à cristaux liquides 11 et 33 auxquelles sont associées respectivement les dispositifs déclairage 29 et 34 qui comprennent chacun un tube fluorescent et un dispositif d'alimentation référencés 12 et 19 pour le dispositif d'éclairage 29. Ce circuit 32 élabore les signaux d'affichage des caractères alphanumériques sur chacune des matrices à cristaux liquides 11 et 33 de manière à visualiser la signification de chacune des touches, identifie les touches actionnées, détermine la signification de chacune des touches actionnées et visualise dans les fenêtres 5 et/ou 6 la signification desdites touches actionnées. Ces différents éléments sont alimentés par le dispositif d'alimentation 27.

le circuit de gestion et de commande 32 comprend (figure 6) essentiellement deux circuits d'identification 35 et 36 des touches actionnées, un par clavier élémentaire, deux unités graphiques 37 et 38 de génération des caractères alphanumériques et autres symboles, associées chacune à une matrice de cristaux liquides, des mémoires 39, 40, 41 et 43 qui mémorisent l'ensemble des significations possibles de chaque touche et la configuration choisie pour chaque touche dans cet ensemble, et une unité centrale 42 qui commande l'ensemble des éléments ci-dessus énumérés. Cette unité centrale 42 reçoit des signaux d'information et/ou de commande de dispositifs accessoires tels que la touche de validation référencée 44 sur les figures 1 et 2. L'unité centrale 42, qui comporte en fait un microprocesseur, est connectée aux différentes mémoires 39, 40, 41 et 43 par un bus 46 qui sert au transfert des informations numériques entre ces divers éléments.

Cette unité centrale 42 fournit par ailleurs, sur les conducteurs de sortie 45, des signaux d'information qui sont destinés à un système de traitement des informations dont le clavier est une unité périphérique. Ce système de traitement des informations envoie des signaux d'information sur les dispositifs d'éclairage 29 et/ou 34, signaux peuvent avoir pour but de provoquer l'affichage de messages dans les fenêtres 5 et/ou 6.

Les différents composants de ce circuit de gestion et de commande 32 sont connus par ailleurs et sont disponibles dans le commerce auprès de nombreux fabricants.

Les mémoires 39, 40 et 41 sont du type à accès aléatoire tandis que la mémoire 43 est du type programmable. Les mémoires 39 et 40 sont affectées à l'enregistrement des caractères ou messages qui doivent être affichés sur les matrices 11 et 33 par l'intermédiaire des unités graphiques 37 et 38. La mémoire 41 est affectée aux besoins de l'unité centrale 42 pour son fonctionnement. La mémoire 43 est destinée à enregistrer l'ensemble des significations possibles de chaque touche du clavier. Cet ensemble de significations possibles peut être organisé en différentes configurations du clavier de manière que l'opérateur puisse choisir une configuration de clavier parmi un certain nombre et non pas une signification pour chacune des touches parmi toutes les significations possibles.

Le fonctionnement succinct du clavier à configuration modifiable selon l'invention est le suivant. Lors de la mise en marche du clavier, le circuit 32 est programmé pour faire apparaître sur les matrices 11 et 33 à l'endroit des fenêtres 3 et 4 les significations respectives des touches adjacentes, ces significations correspondant à une configuration choisie, par exemple l'ensemble des caractères alphanumériques.

Lorsqu'une touche est enfoncée, la lettre A par exemple, sa position ou son identité est déterminée par l'un des circuits d'identification 35 ou 36 selon la partie de clavier 30 ou 31 qui est concernée. Cette position ou identité est ensuite interprétée par l'unité centrale 42 à l'aide des mémoires 39 et 40 pour connaître ta signification (lettre A) de la touche actionnée. L'unité centrale 42 commande alors l'une des unités graphiques 37 ou 38 par l'intermédiaire des mémoires 39 ou 40, respectivement, pour afficher ta lettre A dans l'une des fenêtres 5 ou 6.

Pour changer ta configuration du clavier, l'opérateur peut, conformément à la programmation, soit actionner une touche prévue à cet effet, soit taper un message à l'aide des touches du clavier. En réponse, le circuit 32 lui indique, par messages qui sont affichés dans les fenêtres 5 et 6, les choix de configurations possibles. Lorsque l'opérateur a choisi, cette nouvelle configuration est affichée par l'organe central dans les fenêtres 3 et 4 par l'intermédiaire des mémoires 39 et 40 et des unités graphiques 37 et 38.

Il est à remarquer que la division du clavier de quarante huit touches en deux parties qui sont indépendantes tant au point de vue des touches que des écrans permet, dans certaines circonstances telle qu'une panne, de n'utiliser qu'une partie du clavier constituée d'une matrice 11 ou 33 et des touches correspondantes 30 ou 31. Dans un premier temps, la partie de clavier en fonctionnement a une configuration correspondant à la moitié du clavier total puis, dans un deuxième temps, une configuration correspondant à l'autre moitié, l'une ou l'autre configuration étant appelée par l'opérateur selon le contenu des messages qu'il a à formuler.

Le clavier qui vient d'être décrit présente l'avantage principal de permettre plusieurs configurations possibles, le nombre de configurations n'étant limité que par la capacité de la mémoire 43.

Un autre avantage du clavier selon l'invention réside dans le fait que les touches et le dispositif d'affichage de leur signification, c'est-à-dire la matrice à cristaux liquides associée, sont mécaniquement et électriquement séparés tant dans leur montage que dans leur utilisation, ce qui permet d'obtenir et de maintenir les qualités optimales pour les touches et l'affichage sans interaction entre elles.

Cette indépendance entre les touches et la matrice à cristaux liquides associée présente également l'avantage de faciliter les réparations et, notamment, le remplacement de l'un ou de l'autre en cas de panne d'un seul élément.

La place perdue pour l'affichage et les rangées de touches qui masquent une partie des matrices à cristaux liquides peut être réduite par l'utilisation de touches de faibles dimensions. Ces parties des matrices qui sont masquées ne sont pas alimentées et ne consomment donc pas d'énergie électrique.

Dans l'exemple particulier de réalisation qui a été décrit, les touches sont disposées sur les bandes 7 et 8 qui séparent les fenêtres 3 et 4 percées dans la plaque 1. Bien entendu, en supprimant les bandes 7 et 8, on obtiendrait deux fenêtres ayant les dimensions des matrices à cristaux liquides, matrices sur lesquelles on pourrait mettre en place deux grilles amovibles de support des touches. De telles grilles faciliteraient les réparations et notamment le remplacement des touches défectueuses mais aussi permettraient d'utiliser toute la surface d'une matrice à cristaux liquides en tant que zone d'affichage de messages analogues aux zones délimitées par les fenêtres 5 et 6, simplement en retirant la grille de touches associées.

L'exemple particulier de réalisation tel que décrit ci-dessus comprend plusieurs rangées de touches, chaque rangée étant adjacente à une fenêtre qui délimite la zone de visualisation de la signification de chaque touche de la rangée. Il est clair que l'invention s'applique à une seule rangée de touches associée à une barrette de cristaux liquides et plus généralement, dans ce même ordre d'idées, à plusieurs rangées de touches associées chacune à une barrette de cristaux liquides. Il en est de même des zones d'affichage délimitées par les fenêtres 5 et 6 qui peuvent être remplacées chacune par une barrette à cristaux liquides. Dans le cas d'utilisation de barrettes de cristaux liquides, les rangées de touches sont intercalées entre les barrettes et il n'est plus nécessaire d'utiliser des touches de faible épaisseur par suite de l'existence d'un volume disponible entre les barrettes.

Les zones d'affichage délimitées par les fenêtres 5 et 6 sont utilisées, d'une part, pour afficher la signification des touches actionnées et, d'autre part, pour afficher des messages envoyés à l'opérateur par le système de traitement des informations dont le clavier est un organe périphérique. Il est clair que ces messages destinés à l'opérateur peuvent être quelconques et peuvent par exemple indiquer un groupe de choix possibles à effectuer à l'aide des touches du clavier. Pour effectuer ce choix, le clavier peut être reconfiguré en conséquence par le système de traitement de manière à simplifier le choix qui s'impose à l'opérateur et, dans cette reconfiguration, seules les touches indispensables à ce choix ainsi que les zones de visualisation associées seront utilisées. Ceci montre que le clavier à configuration modifiable selon l'invention présente une grande souplesse d'utilisation pour une meilleure communication entre l'opérateur et le système de traitement des informations.

Dans la description, on a prévu que la signification de la touche actionnée s'affiche dans l'une des zones délimitées par les fenêtres 5 et 6, ce qui indiquent que la touche correspondante avait été actionnée. Bien entendu, l'information indiquant qu'une touche a été actionnée peut être visualisée par tous autres moyens, par exemple en modifiant la luminosité ou la couleur des caractères ou symboles correspondant à la signification de la touche actionnée. Cette manière de faire peut évidemment être mise en oeuvre lorsque le système de traitement présente à l'opérateur différents choix possibles dans les zones délimitées par les fenêtres 5 et 6 dans le mode de fonctionnement tel que décrit au paragraphe précédent.

Il est clair que chaque zone prévue pour la visualisation de la signification de la touche adjacente peut être prévue pour un ou plusieurs caractères, chiffres ou symboles disposés sur une seule ou plusieurs lignes, ce qui permet de réaliser des groupements de caractères, chiffres ou symboles qui correspondent à des abrégés de mots qui ont une connotation proche des mots réels décrivant les fonctions qu'ils sont supposés définir.

Comme on l'a décrit ci-dessus, l'éclairage de chaque matrice de cristaux liquides s'effectue à l'aide d'un tube fluorescent, ce qui occupe une place importante. Ce tube fluorescent peut être remplacé par un dispositif moins volumineux qui comporte des rubans électroluminescents ou une plaque électroluminescente disposés sous la matrice à cristaux liquides. La plaque électroluminescente sera de préférence utilisée pour une matrice à cristaux liquides tandis que les rubans électroluminescents le seront dans le cas de barrettes de cristaux liquides.

L'invention a été décrite dans un dispositif comportant deux matrices à cristaux liquides mais il est clair qu'elle s'applique à d'autres types d'écrans plats tels que les écrans à plasma, les écrans à diodes luminescentes, les écrans à panneaux luminescents.

## Revendications

1. Clavier à configuration modifiable comprenant un premier ensemble composé d'un écran plat de visualisation (11), d'au moins une rangée de touches (30) disposée de manière adjacente audit écran de visualisation, de moyens de mémorisation (43) pour affecter à chaque touche de la rangée un ensemble de significations possibles, de moyens de sélection (42) de la signification choisie pour chaque touche de la rangée, de moyens d'affichage (37, 39) sur ledit écran de la signification choisie par lesdits moyens de sélection (42), de moyens d'identification (35) de la touche actionnée, et de moyens d'exploitation (5) de la signification de la touche actionnée pour, notamment, indiquer la touche qui a été actionnée et faire ressortir sa signification sur ledit écran plat (11), le clavier étant caractérisé en ce qu'il comporte en outre, un second ensemble électriquement et mécaniquement séparé du premier ensemble, relié auxdits moyens de sélection (42), et constitué d'un second écran plat de visualisation (33), d'au moins une rangée de touches (31) disposée de manière adjacente audit second écran, de seconds moyens d'affichage (38, 40) sur ledit second écran plat de la signification choisie par lesdits moyens de sélection (42), de seconds moyens d'identification (36) de la touche actionnée, et de seconds moyens d'exploitation (6) de la signification de la touche pour la faire ressortir sur ledit second écran plat (33), et en ce que lesdits premier et second ensembles fonctionnent simultanément et indépendamment l'un de l'autre de sorte que, en cas de panne de l'un des deux ensembles, l'autre puisse assurer d'une part, son propre fonctionnement, et d'autre part, le fonctionnement de celui qui est en panne.

2. Clavier selon la revendication 1, caractérisé en ce que les différents écrans plats sont réalisés par au moins un seul et unique écran plat (11 ou 33) qui comprend des zones d'affichage (3 ou 4) des significations des touches des rangées et une zone d'affichage (5 ou 6) de la signification de la touche actionnée, chaque zone d'affichage (3, 4) autre que celle affectée à l'affichage de la signification de la touche actionnée étant associée à une rangée de touches qui masque une surface correspondante de l'écran plat unique et la zone d'affichage de la signification de la touche actionnée étant adjacente à une des zones d'affichage (3, 4) de la signification des touches.

3. Clavier selon l'une quelconque des revendications précédentes, caractérisé en ce que les moyens de mémorisation comprennent une mémoire (43) qui enregistre pour chaque touche toutes les significations possibles, lesdites significations étant organisées en plusieurs configurations de toutes les touches.

4. Clavier selon la revendication 3, caractérisé en ce que les moyens de sélection de la signification choisie pour chaque touche comprennent une unité centrale (42) qui choisit l'une des configurations des touches.

5. Clavier selon la revendication 4, caractérisé en ce que les moyens d'affichage comprennent au moins une mémoire (39 ou 40) qui enregistre la configuration choisie et au moins une unité graphique (37 ou 38) qui élabore les signaux de commande d'affichage des écrans plats, lesdites mémoires étant. commandées par l'unité centrale ( 42 ).

6. Clavier selon la revendication 4 ou 5 caractérisé en ce que les moyens d'identification de la touche actionnée comprennent au moins un circuit de décodage (35 ou 36) connecté, d'une part, aux rangées de touches et, d'autre part, à l'unité centrale (42).

7. Clavier selon l'une quelconque des revendications précédentes 2 à 6, caractérisé en ce que l'écran plat unique est fixé sur une plaque (1) et en ce que les zones d'affichage (3, 4) sont délimitées par des fenêtres qui sont percées dans la plaque (1) et qui définissent des bandes de support (7, 8) des rangées de touches.

8. Clavier selon la revendication 7, caractérisé en ce que les zones d'affichage (3, 4, 5, 6) sont délimitées par une grille amovible constituée d'une plaque percée de fenêtres qui sont séparées par des bandes servant de support des rangées de touches, ladite grille étant prévue pour être disposée sur l'écran plat.

9. Clavier selon l'une quelconque des revendications précédentes, caractérisé en ce que l'écran plat est du type matrice à cristaux liquides, des moyens d'éclairage (29, 34) étant alors prévus pour éclairer un côté de ladite matrice.

10. Clavier selon l'une quelconque des revendications 1 à 8 caractérisé en ce que l'écran plat est du type à diodes électro-luminescentes.

11. Clavier selon l'une quelconque des revendications 1 à 8 caractérisé en ce que l'écran plat est du type à plasma.

12. Clavier selon l'une quelconque des revendications 1 à 8, caractérisé en ce que l'écran plat est du type à panneaux électro-luminescents.

**Patentansprüche**

1. Tastatur mit modifizierbarer Konfiguration, mit einer ersten Einheit, die aufgebaut ist aus einem flachen Anzeigeschirm (11), wenigstens einer Reihe von Tasten (30), die an den Anzeigeschirm angrenzend angeordnet sind, Speichermitteln (43), die jeder Taste der Reihe eine Gesamtheit von möglichen Bezeichnungen zuordnen, Auswahlmitteln (42) für die für jede Taste der Reihe gewählte Bezeichnung, Mitteln für die Anzeige (37, 39) der von den Auswahlmitteln (42) gewählten Bezeichnung auf dem Schirm, Mitteln für die Identifikation (35) der betätigten Taste und Mitteln für die Benutzung (5) der Bezeichnung der betätigten Taste, um insbesondere die Taste anzugeben, die betätigt worden ist, und um deren Bezeichnung am flachen Schirm (11) hervorzuheben, wobei die Tastatur dadurch gekennzeichnet ist, daß sie außerdem eine von der ersten Einheit elektrisch und mechanisch getrennte zweite Einheit umfaßt, die mit den Auswahlmitteln (42) verbunden ist und gebildet wird von einem zweiten flachen Anzeigeschirm (33), wenigstens einer Reihe von Tasten (31), die an den zweiten Schirm angrenzend angeordnet sind, zweiten Mitteln für die Anzeige (38, 40) der von den Auswahlmitteln (42) gewählten Bezeichnung auf dem zweiten flachen Schirm, zweiten Mitteln für die Identifikation (36) der betätigten Taste und zweiten Mitteln für die Benutzung (6) der Bezeichnung der Taste, um sie auf dem zweiten flachen Schirm (33) hervorzuheben, und daß die erste und die zweite Einheit gleichzeitig und unabhängig voneinander arbeiten, derart, daß im Falle eines Fehlers in einer der zwei Einheiten die andere einerseits ihre eigene richtige Funktion und andererseits die Funktion der fehlerhaften Einheit gewährleisten kann.

2. Tastatur gemäß Anspruch 1, dadurch gekennzeichnet, daß die unterschiedlichen flachen Schirme durch wenigstens einen einzigen flachen Schirm (11 oder 31) verwirklicht sind, der Anzeigezonen (3 oder 4) für die Bezeichnungen der Tasten der Reihen und eine Anzeigezone (5 oder 6) für die Bezeichnung der betätigten Taste umfaßt, wobei jede Anzeigezone (3, 4), die von der der Anzeige der Bezeichnung der betätigten Taste zugeordneten Zone verschieden ist, einer Reihe von Tasten zugeordnet ist, die eine entsprechende Fläche des einzelnen flachen Schirms abdeckt, und wobei die Zone für die Anzeige der Bezeichnung der betätigten Taste an eine der Anzeigezonen (3, 4) für die Bezeichnung der Tasten angrenzt.

3. Tastatur gemäß einem der vorangehenden Ansprüche, dadurch gekennzeichnet, daß die Speichermittel einen Speicher (43) umfassen, in dem für jede Taste sämtliche möglichen Bezeichnungen abgelegt sind, wobei die Bezeichnungen in einer Mehrzahl von Konfigurationen für sämtliche Tasten geordnet sind.

4. Tastatur gemäß Anspruch 3, dadurch gekennzeichnet, daß die Auswahlmittel der für jede Taste gewählten Bezeichnung eine Zentraleinheit (42) umfassen, die eine der Tastenkonfigurationen auswählt.

5. Tastatur gemäß Anspruch 4, dadurch gekennzeichnet, daß die Anzeigemittel wenigstens einen Speicher (39 oder 40), in dem die gewählte Konfiguration abgelegt ist, und wenigstens eine Graphikeinheit (37 oder 38), die die Anzeigesteuersignale der flachen Schirme entwickelt, umfaßt, wobei die Speicher von der Zentraleinheit (42) gesteuert werden.

6. Tastatur gemäß Anspruch 4 oder 5, dadurch gekennzeichnet, daß die Mittel für die Identifikation der betätigten Taste wenigstens eine Dekodierungsschaltung (35 oder 36) umfassen, die einerseits mit den Tastenreihen und andererseits mit der Zentraleinheit (42) verbunden ist.

7. Tastatur gemäß einem der vorangehenden Ansprüche 2 bis 6, dadurch gekennzeichnet, daß der einzelne flache Schirm an einer Platte (1) befestigt ist und daß die Anzeigezonen (3, 4) durch in der Platte (1) ausgesparte Fenster begrenzt sind, die Halteleisten (7, 8) für die Tastenreihen definieren.

8. Tastatur gemäß Anspruch 7, dadurch gekennzeichnet, daß die Anzeigezonen (3, 4, 5, 6) von einem abnehmbaren Gitter begrenzt werden, das von einer Platte gebildet wird, in der durch Leisten getrennte Fenster ausgespart sind, wobei die Leisten als Halterungen für die Tastenreihen dienen und wobei das Gitter dazu vorgesehen ist, auf dem flachen Schirm angeordnet zu werden.

9. Tastatur gemäß einem der vorangehenden Ansprüche, dadurch gekennzeichnet, daß der flache Schirm vom Flüssigkristallmatrix-Typ ist, so daß folglich Beleuchtungsmittel (29, 34) vorgesehen sind, um eine Seite der Matrix zu beleuchten.

10. Tastatur gemäß einem der Ansprüche 1 bis 8, dadurch gekennzeichnet, daß der flache Schirm vom Elektrolumineszenzdioden Typ ist.

11. Tastatur gemäß einem der Ansprüche 1 bis 8, dadurch gekennzeichnet, daß der flache Schirm vom Plasmatyp ist.

12. Tastatur gemäß einem der Ansprüche 1 bis 8, dadurch gekennzeichnet, daß der flache Schirm vom Elektrolumineszenztafel-Typ ist.

**Claims**

1. A keyboard with an adjustable configuration comprising a first arrangement composed of a flat viewing screen (11), of at least one row of keys (30) arranged in a manner adjacent to the said viewing screen, of memory means (43) in order to provide each key of the row with a set of possible meanings, of means (42) for the selection of the meaning selected for each key of the row, of means (37 and 39) for displaying on the screen the meaning selected by the said selection means (42), of identification means (35) for the operated key and operation means (5) to use the meaning of the operated key in order to more particularly indicate the key which has been operated and to cause the meaning to appear on the said flat screen (11), said keyboard being characterized in that it furthermore comprises a second arrangement which is electrically and mechanically separated from the first arrangement and connected with the said selection means (42), and constituted by a second flat viewing screen (33), of at least one row of keys (31) arranged in a manner adjacent to the second screen, second means (38 and 40) for displaying on the said second flat viewing screen the meaning selected by the said selection means (42), second means for the identification of the operated key and second operating means (6) for the meaning in order to cause it to appear on the second flat screen (33), and in that the said first and second arrangements simultaneously operate independently of each other in such a manner that in the event of a failure of the one of the two arrangements, the other one is able ensure its own operation on the one hand and on the one hand of the operation of the one which has failed.

2. The keyboard as claimed in claim 1, characterized in that the different screens are constituted by at least one single and unique flat screen (11 or 33) which comprises display zones (3 or 4) for the meanings of the rows, and a display zone (5 or 6) for the meaning of the operated key, each display zone (3 and 4) other than the one involved in the display of the meaning of the operated key being associated with a row of keys which masks a corresponding surface of the unique flat screen and the display zone of the meaning of the operated key being adjacent to the one of the display -zones (3 and 4) for the meaning of the keys.

3. The keyboard as claimed in any one of the preceding claims, characterized in that the memory means comprise a memory (43) which from each key registers all the possible meanings thereof, the said meanings being organized in a plurality of configurations of all the keys.

4. The keyboard as claimed in claim 3, characterized in that the means for the selection of the meaning selected for each key comprises a central unit (42) which selects one of the configurations of the keys.

5. The keyboard as claimed in claim 4, characterized in that the means for the display means comprises at least one memory (39 or 40) which registers the selected configuration and at least one graphics unit (37 or 38) which processes the display command signals for the flat screens, the said memories being controlled by the central unit (42).

6. The keyboard as claimed in claim 4 or claim 5, characterized in that the measn for the identification of the operated key comprise at least one decoding circuit (35 or 36) connected on the one hand with the rows of keys and on the other hand with the central unit (42).

7. The keyboard as claimed in any one of the preceding claims 2 through 6, characterized in that the unique flat screen is fixed on a board (1) and in that the display zones (3 and 4) are delimited by windows which are made in the board (1) and which define support bands (7 and 8) for the rows of keys.

8. The keyboard as claimed in claim 7, characterized in that the display zones (3, 4, 5 and 6) are delimited by a retractable grid constituted by a board with windows which are separated by bands functioning to support the rows of keys, the said grid being provided in order to be arranged on the flat screen.

9. The keyboard as claimed in any one of the preceding claims, characterized in that the flat screen is of the liquid crystal type, illuminating means (29 and 34) being arranged in order to light up one side of the said matrix.

10. The keyboard as claimed in any one of the preceding claims 1 through 8, characterized in that the flat screen is of the type having electroluminescent diodes.

11. The keyboard as claimed in any one of the preceding claims 1 through 8 , characterized in that the flat screen is of the plasma type.

12. The keyboard as claimed in any one of the preceding claims 1 through 8, characterized in that the flat screen is of the electroluminescent panel type.

# FIG_1

# FIG_2

# FIG_3

EP 0 294 293 B1

FIG_4

FIG_5

# FIG_6